# EUROPÄISCHE PATENTSCHRIFT

(11) **EP 3 672 850 B1**
(45) Veröffentlichungstag und Bekanntmachung des Hinweises auf die Patenterteilung: **01.02.2023**
(21) Anmeldenummer: 18743017.8
(22) Anmeldetag: 19.07.2018
(51) Int. Cl.: B60T 8/40

(54) **KOLBENPUMPENAGGREGAT FÜR EINE HYDRAULISCHE FAHRZEUGBREMSANLAGE**
PISTON PUMP ASSEMBLY FOR A HYDRAULIC VEHICLE BRAKE SYSTEM
GROUPE MOTOPOMPE À PISTONS POUR UN SYSTÈME DE FREINAGE HYDRAULIQUE DE VÉHICULE

(30) Priorität: 24.08.2017 DE 102017214859
(43) Veröffentlichungstag der Anmeldung: 01.07.2020
(73) Patentinhaber: Robert Bosch GmbH, 70442 Stuttgart (DE)
(72) Erfinder: MAYR, Matthias, 87549 Rettenberg (DE); WEH, Andreas, 87477 Sulzberg (DE)
(86) Internationale Anmeldenummer: PCT/EP2018/069624
(87) Internationale Veröffentlichungsnummer: WO 2019/037965

(56) Entgegenhaltungen:
- EP-A1- 2 762 371
- WO-A1-98/42553
- DE-A1-102015 214 585
- DE-A1-102015 222 286

## Beschreibung

### Stand der Technik

Die Erfindung betrifft ein Kolbenpumpenaggregat für eine hydraulische Fahrzeugbremsanlage mit den Merkmalen des Oberbegriffs des Anspruchs 1.

Kolbenpumpen dienen in hydraulischen Fremdkraft-Fahrzeugbremsanlagen zur Erzeugung eines hydraulischen Bremsdrucks für eine Betriebsbremsung mit Fremdkraft und/oder in schlupfgeregelten Fahrzeugbremsanlagen ebenfalls zur Erzeugung eines Bremsdrucks und zu einer Förderung von Bremsflüssigkeit aus Radbremsen nach einer Druckabsenkung zurück zu den Radbremsen um die Radbremsdrücke wieder zu erhöhen oder zurück in Richtung eines Hauptbremszylinders während einer Schlupfregelung.

Die europäische Patentanmeldung EP 2 762 371 A1 offenbart eine hydraulische Fahrzeugbremsanlage mit einem muskelkraftbetätigbaren Hauptbremszylinder, einer Schlupfregelung, hydraulischen Radbremsen und einem elektromechanischen Fremdkraftzylinder, der zwischen dem Hauptbremszylinder und der Schlupfregelung angeordnet ist. Der Fremdkraftzylinder weist zwei Kolben und eine Kugelgewindetrieb auf, mit dem einer der beiden Kolben im Zylinder verschiebbar ist. Zum Antrieb weist der Fremdkraftzylinder einen Elektromotor auf, der achsparallel außen am Fremdkraftzylinder angeordnet ist und der über ein Stirnradgetriebe mit drei Zahnrädern eine Spindelmutter des Kugelgewindetriebs drehend antreibt. Zu einer Entlüftung weist ein Gehäuse des Kugelgewindetriebs eine Radialbohrung auf.

Die Offenlegungsschrift DE 10 2015 214 585 A1 offenbart einen Hydraulikblock mit einer Hauptbremszylinderbohrung und einer zu ihr senkrechten Fremdkraftzylinderbohrung, die von einer Motorseite zu einer gegenüberliegenden Seite durch den Hydraulikblock durchgeht. In die Fremdkraftzylinderbohrung ist eine Laufbuchse eingesetzt, in der ein Fremdkraftkolben axial verschiebbar aufgenommen ist. Der Kolben ist mit einem Kugelgewindetrieb über ein Planetengetriebe von einem Elektromotor antreibbar, der koaxial zur Fremdkraftzylinderbohrung außen am Hydraulikblock angeordnet ist.

Die internationale Patentanmeldung WO 98/42 553 A1 offenbart einen Hydraulikblock mit einem an einer Motorseite angeordneten Elektromotor und einem auf einer gegenüberliegenden Steuergerätseite angeordneten Steuergerätgehäuse, das ein elektronisches Steuergerät enthält. Eine Kontaktierung des Elektromotors ist durch den Hydraulikblock zum Steuergerät durchgeführt, wobei die Durchführung durch den Hydraulikblock zugleich eine Entlüftung eines Motorgehäuses des Elektromotors in das Steuergerätgehäuse auf der gegenüberliegenden Seite des Hydraulikblocks bildet. Das Steuergerätgehäuse weist eine Entlüftung nach außen auf.

### Offenbarung der Erfindung

Das erfindungsgemäße Kolbenpumpenaggregat mit den Merkmalen des Anspruchs 1 ist zur Erzeugung eines Bremsdrucks und/oder zur Förderung von Bremsflüssigkeit in einer hydraulischen Fremdkraft- und/oder schlupfgeregelten Fahrzeugbremsanlage vorgesehen. Es weist einen Elektromotor als Antrieb, ein Schraubgetriebe, beispielsweise einen Spindeltrieb, der eine drehende Antriebsbewegung des Elektromotors in eine translatorische Bewegung wandelt, und eine Kolben-Zylinder-Einheit auf, deren Kolben mit dem Schraubgetriebe im Zylinder verschiebbar ist. Dabei geht es um eine Relativbewegung zwischen Kolben und Zylinder, es kann auch der Zylinder auf dem Kolben verschoben werden. Dem Elektromotor und dem Schraubgetriebe kann ein Untersetzungsgetriebe, beispielsweise ein Planetengetriebe, zwischengeschaltet sein.

Bei einem Arbeitshub des Kolbens der Kolben-Zylinder-Einheit kann es zu einem Unterdruck und bei einem Rückhub zu einem Überdruck auf einer Rückseite des Kolbens kommen. Der Arbeitshub ist der Hub, bei dem der Kolben Bremsflüssigkeit aus dem Zylinder der Kolben-Zylinder-Einheit verdrängt und der Rückhub der entgegengesetzte Hub, bei dem der Kolben Bremsflüssigkeit in den Zylinder saugt. Die Rückseite ist die Seite des Kolbens, die nicht mit Bremsflüssigkeit beaufschlagt ist oder die jedenfalls nicht der Verdrängung und dem Ansaugen von Bremsflüssigkeit dient.

Zu einer Vermeidung oder Verringerung eines Unterdrucks oder Überdrucks auf der Rückseite des Kolbens sieht die Erfindung eine radiale Entlüftung des Zylinders vor, durch die die Rückseite des Kolbens mit einem größeren Volumen, bei einer Ausgestaltung der Erfindung mit einem Innenraum eines Motorgehäuses des Elektromotors, oder eventuell mit einer Umgebung kommuniziert.

Die Erfindung vermeidet beispielsweise, dass Luft, die der Kolben der Kolben-Zylinder-Einheit des Kolbenpumpenaggregats bei einer im Zylinder hin- und her gehenden Hubbewegung mit seiner Rückseite "pumpt", ein Wälzlager durchströmt, das zu einer Drehlagerung des Schraubgetriebes an einem offenen Ende des Zylinders angeordnet ist. Solche durch das Wälzlager geblasene Luft könnte ein Schmiermittel aus dem Drehlager in Richtung des Elektromotors herausgeblasen und/oder in den Zylinder der Kolben-Zylinder-Einheit saugen, was beides unerwünscht ist. Drehbar gelagert ist ein Teil des Schraubgetriebes, normalerweise eine Spindel oder eine Mutter. Allerdings ist die Erfindung nicht auf Kolbenpumpenaggregate beschränkt, die ein solches Drehlager aufweisen.

Die Unteransprüche haben vorteilhafte Ausgestaltungen und Weiterbildungen der im Anspruch 1 angegebenen Erfindung zum Gegenstand.

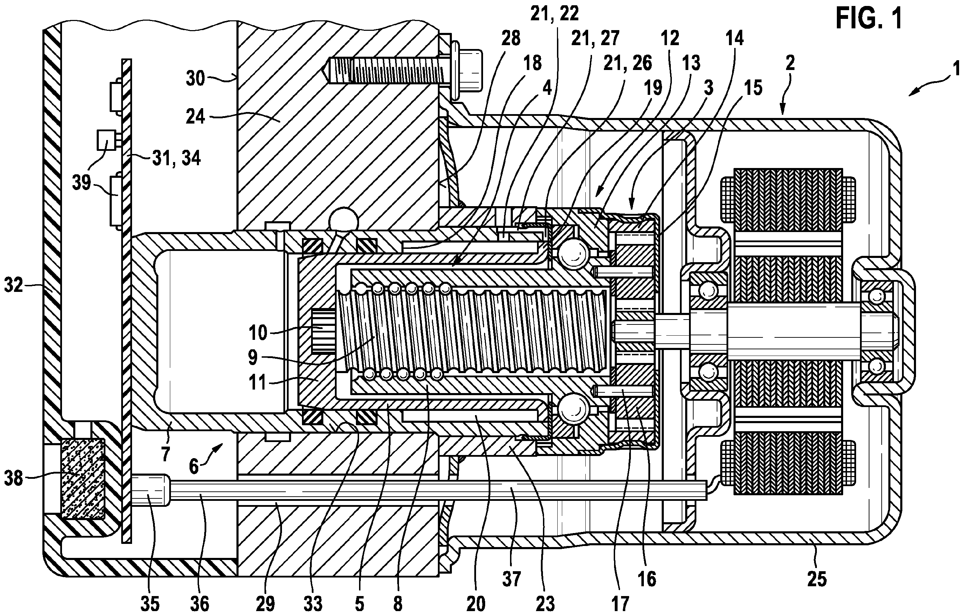

### Kurze Beschreibung der Zeichnung

Die Erfindung wird nachfolgend anhand einer in der Zeichnung dargestellten Ausführungsform näher erläutert. Die einzige Figur zeigt einen Achsschnitt eines erfindungsgemäßen Kolbenpumpenaggregats.

### Ausführungsform der Erfindung

Das in der Zeichnung dargestellte, erfindungsgemäße Kolbenpumpenaggregat 1 ist zu einer Druckerzeugung in einer hydraulischen Fremdkraft-Fahrzeugbremsanlage und/oder zur Druckerzeugung und zu einer Förderung von Bremsflüssigkeit in einer schlupfgeregelten hydraulischen Fahrzeugbremsanlage während einer Schlupfregelung vorgesehen. Solche Schlupfregelungen sind beispielsweise Bremsblockierschutz-, Antriebsschlupf-, Fahrdynamikregelungen und elektronische Stabilitätsprogramme, für die die Abkürzungen ABS, ASR, FDR und ESP gebräuchlich sind.

Zum Antrieb weist das erfindungsgemäße Kolbenpumpenaggregat 1 einen Elektromotor 2 auf, mit dem ein Planetengetriebe 3 antreibbar ist. Das Planetengetriebe 3 treibt ein Schraubgetriebe 4 drehend an, das die Drehbewegung in eine Verschiebung wandelt um einen Kolben 5 einer Kolben-Zylinder-Einheit 6 in einem Zylinder 7 zu verschieben. Der Kolben 5 ist axial im Zylinder 7 verschieblich, eine Verschieberichtung des Kolbens 5 im Zylinder 7 ist also axial oder achsparallel. In der beschriebenen und erläuterten Ausführungsform der Erfindung ist das Schraubgetriebe 4 ein Kugelgewindetrieb. Das Planetengetriebe 3, das allgemein auch als Untersetzungsgetriebe aufgefasst werden kann, treibt eine Mutter 8 des Schraubgetriebes 4 drehend an und die Mutter 8 verschiebt eine Spindel 9 des Schraubgetriebes 4. Davon abweichend kann auch umgekehrt die Spindel 9 drehend angetrieben und die Mutter 8 zusammen mit dem Kolben 5 verschoben werden. Ein dem Planetengetriebe 3 und dem Elektromotor 2 fernes Ende der Spindel 9 ist durch einen mit ihr einstückigen Zapfen 10, der in ein Sackloch in einem Kolbenboden 11 des Kolbens 5 eingepresst ist, mit dem Kolben 5 verbunden, so dass sich der Kolben 5 mit der Spindel 9 verschiebt. Der Kolben 5 ist als Hohlkolben ausgeführt, der an einem dem Planetengetriebe 3 und dem Elektromotor 2 fernen Ende einstückig von seinem Kolbenboden 11 geschlossen und an einem dem Planetengetriebe 3 und dem Elektromotor 2 zugewandten Ende offen ist. Das Schraubgetriebe 4 ist in dem als Hohlkolben ausgeführen Kolben 5 der Kolben-Zylinder-Einheit 6 angeordnet. Die genannten Bauteile des Kolbenpumpenaggregats 1, das heißt der Elektromotor 2, das zwischen dem Elektromotor 2 und dem Schraubgetriebes 4 angeordnete Planetengetriebe 3, das Schraubgetriebe 4, der Kolben 5 und der Zylinder 7 sind koaxial.

Die Mutter 8 des Schraubgetriebes 3 ist mit einem Drehlager 12 drehbar gelagert, dessen Außenring 13 an einer offenen Stirnseite des Zylinders 7 angeordnet ist, die dem Planetengetriebe 3 und dem Elektromotor 2 zugewandt ist. In der beschriebenen und dargestellten Ausführungsform der Erfindung ist das Drehlager 12 ein Kugellager, also ein Wälzlager.

Das Planetengetriebe 3 ist zwischen der Kolben-Zylinder-Einheit 6 oder genauer zwischen dem Drehlager 12 und dem Elektromotor 2 angeordnet. In der dargestellten und beschriebenen Ausführungsform der Erfindung ist ein Hohlrad 14 des Planetengetriebes 3 mittels eines napfförmigen Halters 15 an einer dem Elektromotor 2 zugewandten Seite des Außenrings 13 des Drehlagers 12 befestigt. Die Mutter 8 des Schraubgetriebes 4 bildet einen Planetenträger des Planetengetriebes 3, an ihrer dem Elektromotor 2 zugewandten Stirnseite sind Planetenräder 16 des Planetengetriebes 3 mit Zylinderstiften 17 drehbar gelagert.

Der Zylinder 7 erweitert sich innen mit einer Ringstufe 18 in Richtung seines offenen, dem Elektromotor 2 zugewandten Stirnendes. Der Kolben 5 weist an seinem offenen, dem Elektromotor 2 zugewandten Stirnende einen nach außen abstehenden Flansch 19 auf, der in die Durchmessererweiterung des Zylinders 7 greift. Dadurch ist zwischen dem Kolben 5 und dem Zylinder 7 ein Ringspalt 20 gebildet, dessen Volumen sich bei einem Hub des Kolbens 5, das heißt bei einer axialen Bewegung des Kolbens 5 im Zylinder 7, ändert.

Zu einem Druckausgleich weist der Zylinder 7 eine Entlüftung 21 auf, die in der dargestellten und beschriebenen Ausführungsform der Erfindung ein radiales Loch 22 aufweist, das eine Umfangswand des Zylinders 7 durchsetzt und in den Ringspalt 20 mündet. Das radiale Loch 22 durchsetzt auch einen rohrförmigen Kragen 23, mit der der Zylinder 7 an einem Hydraulikblock 24 befestigt ist. Die Entlüftung 21 führt in ein Motorgehäuse 25 des Elektromotors 2.

Zusätzlich weist der Zylinder 7 in seinem offenen, dem Elektromotor 2 zugewandten Stirnende eine Radialnut 26 auf, die in eine achsparallele Nut 27 außen in der Umfangswand des Zylinders 7 übergeht und in das radiale Loch 22 in der Umfangswand des Zylinders 7 und dem Kragen 23 mündet. Durch die Nuten 26, 27, die ebenfalls eine Entlüftung 21 bzw. Teil der Entlüftung 21 der Rückseite des Kolbens 7 bzw. des Zylinders 5 sind, erfolgt ein Druckausgleich einer Rückseite bzw. eines Innenraums des als Hohlkolben ausgebildeten Kolbens 5, dessen Volumen sich bei einem Hub ändert. Die Rückseite des Kolbens 5 ist die Seite, die nicht mit Bremsflüssigkeit beaufschlagt ist und die keine Bremsflüssigkeit aus dem Zylinder 7 verdrängt oder in ihn ansaugt. Bei dem als Hohlkolben ausgebildeten Kolben 5 der dargestellten und beschriebenen Ausführungsform der Erfindung ist die Rückseite des Kolbens 5 der Innenraum des Kolbens 5.

Die Entlüftung 21 bzw. der Druckausgleich des Ringspalt 20 zwischen dem Zylinder 7 und dem Kolben 5 und der Rückseite bzw. dem Innenraum des Kolbens 5 erfolgt wie erläutert in das Motorgehäuse 25 des Elektromotors 2. Es wird vermieden, dass der Kolben 5 bei seinem Hub Luft durch das Drehlager 12, das in der dargestellten und beschriebenen Ausführungsform der Erfindung ein Wälzlager, nämlich ein Kugellager ist, "pumpt", und dabei Schmiermittel aus dem Drehlager 12 in Richtung des Elektromotors 2 bläst oder in den Innenraum des Kolbens 5 und in den Zylinder 7 saugt.

Nicht notwendig ist, dass die Entlüftung 21 ein radiales Loch 22 und die Radialnut 26 sowie die achsparallel in Nut 27 aufweist. Andere Entlüftungen des Ringspalt 20 zwischen dem Kolben 5 und dem Zylinder 7 und/oder der Rückseite des Kolbens 5 sind möglich.

Bei einem Hub des Kolbens 5 bewegt sich die Spindel 9 des Schraubgetriebes 4 axial in der Mutter 8 und wirkt dabei vergleichbar einem Kolben: Sie saugt Luft an und verdrängt sie bei entgegengesetzter Bewegung wieder aus einem Innenraum der Mutter 8. Der Innenraum der Mutter 8 oder allgemein ausgedrückt das Schraubgetriebe 4 weist eine Entlüftung durch die Zahnräder des Planetengetriebes 3 in das Motorgehäuse 25 des Elektromotors 2 auf. Die Entlüftung des Innenraums der Mutter 8 des Schraubgetriebes 4 erfolgt nicht durch das Drehlager 12.

Das erfindungsgemäße Kolbenpumpenaggregat 1 ist an bzw. in dem Hydraulikblock 24 einer Bremsdruckregelung und Schlupfregelung einer im Übrigen nicht dargestellten, hydraulischen Fremdkraft-Fahrzeugbremsanlage angeordnet. Solche Schlupfregelungen wie beispielsweise Blockierschutz-, Antriebsschlupf-und Fahrdynamikregelungen/elektronische Stabilitätsprogramme, für die die Abkürzungen ABS, ASR und FDR/ESP gebräuchlich sind, und Hydraulikblöcke 24 sind dem Fachmann an sich bekannt und werden hier nicht näher erläutert. Der Hydraulikblock 24 dient einer mechanischen Befestigung und einer hydraulischen Verschaltung hydraulischer, elektrohydraulischer und elektronischer Bauelemente der Bremsdruckregelung und Schlupfregelung, zu denen außer dem Kolbenpumpenaggregat 1 Magnetventile, Rückschlagventile, Hydrospeicher und Dämpferkammern gehören, die in und am Hydraulikblock 24 angeordnet und durch eine nicht gezeichnete Verbohrung des Hydraulikblocks 24 hydraulisch miteinander verschaltet sind. Bestückt mit dem Kolbenpumpenaggregat 1 und den weiteren Bauelementen der Bremsdruckregelung und Schlupfregelung bildet der Hydraulikblock 24 ein Hydraulikaggregat, das Teil bzw. ein Kernstück der Bremsdruckregelung und Schlupfregelung ist. Bei einer Betriebsbremsung wird ein Bremsdruck der Fahrzeugbremsanlage per Fremdkraft mit dem erfindungsgemäßen Kolbenpumpenaggregat 1 erzeugt. Bei einer Schlupfregelung erzeugt das Kolbenpumpenaggregat 1 einen Bremsdruck und/oder fördert Bremsflüssigkeit nach Absenkung eines Bremsdrucks zurück in nicht gezeichnete, hydraulische Radbremsen der Fahrzeugbremsanlage oder in Richtung eines Hauptbremszylinders oder eines Bremsflüssigkeitsvorratsbehälters, die ebenfalls nicht gezeichnet sind.

Der Zylinder 7 des erfindungsgemäßen Kolbenpumpenaggregats 1 ist in einem Durchgangsloch des Hydraulikblocks 24 angeordnet, aus dem er auf beiden Seiten vorsteht. Das Durchgangsloch bildet eine Aufnahme 33 für den Zylinder 7 der Kolben-Zylinder-Einheit 6 des erfindungsgemäßen Kolbenpumpenaggregats 1. Der Elektromotor 2 ist an einer Seite des Hydraulikblocks 24 befestigt, die hier als Motorseite 28 bezeichnet wird. Der Innenraum des Motorgehäuses 25 ist durch ein Durchgangsloch 29 entlüftet, das von der Motorseite 28 zu einer gegenüberliegenden Seite des Hydraulikblocks 24 führt, die hier als Steuergeräteseite 30 bezeichnet wird. An der Steuergeräteseite 30 ist ein elektronisches Steuergerät 31 in einem Steuergerätgehäuse 32 angeordnet. Das Steuergerät 31 ist als mit elektronischen Bauelementen 33 bestückte Leiterplatte 34 gezeichnet und regelt die hydraulischen und elektrohydraulischen Bauelemente der Bremsdruckregelung und Schlupfregelung einschließlich des Elektromotors 2 des erfindungsgemäßen Kolbenpumpenaggregats 1 und des Hydraulikaggregats.

Das elektronische Steuergerät 31 weist eine mehrpolige, elektrische Steckerkupplung 35 auf, in die ein mehrpoliger Stecker 36 des Elektromotors 2 gesteckt ist. Der Stecker 34 befindet sich an einem dem Elektromotor 2 fernen Ende einer Steckerstange 37, die achsparallel vom Elektromotor 2 absteht und durch das Durchgangsloch 29 im Hydraulikblock 24 hindurch geht. Die Steckerstange 37 ist eine steife Kunststoffumhüllung elektrischer Anschlussleitungen und Kommutierungsleitungen des Elektromotors 2. Die Steckerstange 37 weist einen kleineren Durchmesser als das Durchgangsloch 29 im Hydraulikblock 24 auf, so dass das Durchgangsloch 29 außer zur Durchführung der Anschlüsse des Elektromotors 2 auch der Entlüftung des Innenraums des Motorgehäuses 25 des Elektromotors 2 dient.

Es kommunizieren also der Ringsspalt 20 zwischen dem Zylinder 7 und dem Kolben 5 der Kolben-Zylinder-Einheit 6 und die Rückseite bzw. der Innenraum des als Hohlkolben ausgeführten Kolbens 5 und der Innenraum der Mutter 8 des Schraubgetriebes 4 oder allgemein ausgedrückt das Schraubgetriebe 4 mit dem Innenraum des Motorgehäuses 25 des Elektromotors 2 und durch das Durchgangsloch 29 im Hydraulikblock 24 mit einem Innenraum des Steuergerätgehäuses 32, deren Volumina ein Vielfaches größer als eine Volumenänderung im Ringspalt 20 um den und auf der Rückseite des Kolbens 5 und des Schraubgetriebes 4 bei einem Kolbenhub ist, wodurch der Ringspalt 20, die Rückseite des Kolbens 5 und das Schraubgetriebe 4 entlüftet sind.Das Steuergerätgehäuse 31 weist ein poröses Filterelement als Druckausgleichselement 38 auf, durch das der Innenraum des Steuergerätgehäuses 32 mit einer Umgebung kommuniziert. Dadurch erfolgt ein Druckausgleich bei einem sich ändernden Umgebungsdruck.

## Patentansprüche

1. Kolbenpumpenaggregat für eine hydraulische Fahrzeugbremsanlage, mit einem Elektromotor (2), mit einem Schraubgetriebe (4), das mit dem Elektromotor (2) drehend antreibbar ist und eine Drehbewegung des Elektromotors (2) in eine Verschiebung wandelt, und mit einer Kolben-Zylinder-Einheit (6) mit einem Kolben (5), der mit dem Schraubgetriebe (4) in einem Zylinder (7) verschiebbar ist, wobei der Zylinder (7) eine radiale Entlüftung (21) einer Rückseite des Kolbens (5) mit einem radialen Loch (22) in einer Umfangswand des Zylinders (7) aufweist, **dadurch gekennzeichnet, dass** die Entlüftung (21) eine achsparallele Nut (27) außen in der Umfangswand des Zylinders (7), die in das radiale Loch (22) in der Umfangswand des Zylinders (7) mündet, und eine Radialnut (26) in einem offenen, dem Elektromotor (2) zugewandten Stirnende des Zylinders (7), die in die achsparallele Nut (27) übergeht, aufweist.

2. Kolbenpumpenaggregat nach Anspruch 1, **dadurch gekennzeichnet, dass** an einem dem Elektromotor (2) zugewandten Ende des Zylinders (7) ein Drehlager (12) für das Schraubgetriebe (4) angeordnet ist und sich die Entlüftung (21) auf einer dem Elektromotor (2) abgewandten Seite des Drehlagers (12) befindet.

3. Kolbenpumpenaggregat nach Anspruch 1, **dadurch gekennzeichnet, dass** der Zylinder (7) eine radiale Entlüftung (21) eines Ringspalts (20) zwischen dem Zylinder (7) und dem Kolben (6) aufweist.

4. Kolbenpumpenaggregat nach Anspruch 1, **dadurch gekennzeichnet, dass** die Entlüftung (21) mit einem Innenraum eines Motorgehäuses (25) des Elektromotors (2) kommuniziert.

5. Kolbenpumpenaggregat nach Anspruch 1, **dadurch gekennzeichnet, dass** der Zylinder (7) in einer Aufnahme (33) eines Hydraulikblocks (24) aufgenommen ist, an dem der Elektromotor (2) angeordnet ist.

6. Kolbenpumpenaggregat nach Anspruch 1, **dadurch gekennzeichnet, dass** der Hydraulikblock (24) eine Entlüftung (29) für ein Motorgehäuse (25) des Elektromotors (2) aufweist.

## Claims

1. Piston pump assembly for a hydraulic vehicle brake system, comprising an electric motor (2), a worm gear (4) which is able to be driven in rotation by the electric motor (2) and converts a rotational movement of the electric motor (2) into a displacement, and comprising a piston-cylinder unit (6) with a piston (5) which is displaceable in a cylinder (7) by the worm gear (4), wherein the cylinder (7) has a radial vent (21) for a rear side of the piston (5) with a radial hole (22) in a circumferential wall of the cylinder (7),
**characterized in that**
the vent (21) has an axially parallel groove (27) on the outside in the circumferential wall of the cylinder (7), which opens into the radial hole (22) in the circumferential wall of the cylinder (7), and a radial groove (26), which merges into the axially parallel groove (27), in an open end face of the cylinder (7) that faces the electric motor (2).

2. Piston pump assembly according to Claim 1, **characterized in that** a rotary bearing (12) for the worm gear (4) is arranged on an end of the cylinder (7) that faces the electric motor (2), and the vent (21) is located on the side of the rotary bearing (12) that faces away from the electric motor (2).

3. Piston pump assembly according to Claim 1, **characterized in that** the cylinder (7) has a radial vent (21) for an annular gap (20) between the cylinder (7) and the piston (6).

4. Piston pump assembly according to Claim 1, **characterized in that** the vent (21) communicates with an internal space of a motor housing (25) of the electric motor (2).

5. Piston pump assembly according to Claim 1, **characterized in that** the cylinder (7) is accommodated in a receptacle (33) of a hydraulic block (24), on which the electric motor (2) is arranged.

6. Piston pump assembly according to Claim 1, **characterized in that** the hydraulic block (24) has a vent (29) for a motor housing (25) of the electric motor (2).

## Revendications

1. Groupe de pompe à piston pour un système de freinage hydraulique de véhicule, comprenant un moteur électrique (2), un engrenage hélicoïdal (4) qui peut être entraîné en rotation par le moteur électrique (2) et qui convertit un mouvement de rotation du moteur électrique (2) en un déplacement, et une unité piston-cylindre (6) comprenant un piston (5) qui peut être déplacé dans un cylindre (7) par l'engrenage hélicoïdal (4), le cylindre (7) présentant un évent radial (21) d'un côté arrière du piston (5) avec un trou radial (22) dans une paroi périphérique du cylindre (7), **caractérisé en ce que** l'évent (21) présente une rainure parallèle à l'axe (27) à l'extérieur dans la paroi périphérique du cylindre (7), qui débouche dans le trou radial (22) dans la paroi périphérique du cylindre (7), et une rainure radiale (26) dans une extrémité frontale ouverte du cylindre (7), tournée vers le moteur électrique (2), qui se fond dans la rainure parallèle à l'axe (27).

2. Groupe de pompe à piston selon la revendication 1, **caractérisé en ce qu'**un palier de rotation (12) pour l'engrenage hélicoïdal (4) est agencé à une extrémité du cylindre (7) tournée vers le moteur électrique (2) et l'évent (21) se trouve sur un côté du palier de rotation (12) détourné du moteur électrique (2).

3. Groupe de pompe à piston selon la revendication 1, **caractérisé en ce que** le cylindre (7) présente un évent radial (21) d'un interstice annulaire (20) entre le cylindre (7) et le piston (6).

4. Groupe de pompe à piston selon la revendication 1, **caractérisé en ce que** l'évent (21) communique avec un espace intérieur d'un carter de moteur (25) du moteur électrique (2).

5. Groupe de pompe à piston selon la revendication 1, **caractérisé en ce que** le cylindre (7) est logé dans un logement (33) d'un bloc hydraulique (24) sur lequel est agencé le moteur électrique (2).

6. Groupe de pompe à piston selon la revendication 1, **caractérisé en ce que** le bloc hydraulique (24) présente un évent (29) pour un carter de moteur (25) du moteur électrique (2) .
